# EUROPÄISCHE PATENTANMELDUNG

(11) **EP 3 726 827 A1**
(43) Veröffentlichungstag der Anmeldung: **21.10.2020**
(21) Anmeldenummer: 19169197.1
(22) Anmeldetag: 15.04.2019
(51) Int. Cl.: H04N 5/225, G02B 7/00, G02B 7/02, H01L 27/146

(54) **KAMERASENSOR MIT HALTERUNG**

(71) Anmelder: Siemens Aktiengesellschaft, 80333 München (DE)
(72) Erfinder: Engel, Thomas, 73432 Aalen (DE); Laloni, Claudio, 82024 Taufkirchen (DE)

(57) **Zusammenfassung**

Die Erfindung betrifft einen flächenhaften, ortsauflösenden Bildsensor (10) für eine Kamera. Der Bildsensor (10) ist dadurch gekennzeichnet, dass er eine strukturelle Vorrichtung zur Halterung eines optischen Bauteils aufweist. Beispiele für ein optisches Bauteil sind optische Filter oder Linsenarrays. Des Weiteren betrifft die Erfindung eine Kamera, insbesondere eine digitale Kamera, mit einem derartigen flächenhaften, ortsauflösenden Bildsensor (10).

## Beschreibung

Die Erfindung betrifft einen flächenhaften, ortsauflösenden Bildsensor für eine Kamera sowie eine Kamera mit einem solchen Bildsensor.

Viele Bildsensoren digitaler Kameras weisen optische Filter und ein Linsenarray auf. Die optischen Filter bewirken, als Farbfilter ausgestaltet, dass nur Licht eines bestimmten Wellenlängenbereichs auf die dahinter angeordneten Photodioden (Pixel) des Bildsensors treffen. Linsenarrays bestehen üblicherweise aus einer Mikrolinse pro Photodiode und bewirken, dass möglichst viel Licht auf die lichtempfindliche Fläche der Photodioden trifft.

Optische Filter, Linsenarrays und andere optische Bauteile werden bisher während des Herstellungsprozesses des Bildsensors fest auf den Sensor aufgebracht, in der Regel mit einer Klebeverbindung. Nach Fertigstellung des Bildsensors können die genannten optischen Bauteile nicht mehr, oder nur sehr aufwändig, ausgetauscht werden.

Für gewisse Anwendungszwecke wäre es jedoch wünschenswert, die Filter oder Linsenarrays austauschen oder zusätzliche optische Bauteile am Bildsensor anbringen zu können. Dies ist bei derzeitigen, kommerziell erhältlichen Bildsensoren nicht möglich. Auf Forschungsebene werden vereinzelt an den Rand des Bildsensors, angrenzend an die optisch aktive Fläche, Markierungen aufgedruckt oder aufgezeichnet. Ein Benutzer kann dann ein gewünschtes optisches Bauteil, beispielsweise einen Farbfilter, auf den Bildsensor legen und anhand der Markierungen entsprechend ausrichten. Da die Ausrichtung sehr präzise stimmen muss - es wird oftmals eine Genauigkeit im Pixel-Bereich, also im Mikrometer-Bereich, gefordert - wird das optische Bauteil in der Regel unter dem Mikroskop ausgerichtet. Für Sensoren ohne diese Markierungen kann eine Ausrichtung der gewünschten optischen Bauteile nur erfolgen, wenn man sich das Pixelmuster z.B. unmittelbar unter einem Mikroskop anschaut und so selbst einen Bezug zu den Pixeln ableitet.

Dies ist zeitaufwändig und oftmals ungenau.

Es besteht somit die Aufgabe, einen Weg zu finden, wie ein optisches Bauteil in möglichst einfacher Weise austauschbar auf einem Bildsensor einer Kamera angebracht werden kann. Bevorzugt findet diese Anbringung mit einer definierten Anordnung des optischen Bauteils relativ zu Sensorelementen des Bildsensors statt. Ferner besteht die Aufgabe, eine Kamera bereitzustellen, bei der optische Bauteile möglichst einfach an dem Bildsensor ausgetauscht werden können.

Diese Aufgaben werden durch die Ansprüche 1 und 14 der vorliegenden Patentanmeldung gelöst. Vorteilhafte Ausführungsformen und Varianten sind in den weiteren Ansprüchen und der Beschreibung offenbart.

Demgemäß wird in einem Aspekt der Erfindung ein flächenhafter, ortsauflösender Bildsensor für eine Kamera bereitgestellt. Der Bildsensor ist dadurch gekennzeichnet, dass er eine strukturelle Vorrichtung zur Halterung eines optischen Bauteils auf dem Bildsensor aufweist.

Die Erfinder haben erkannt, dass durch Vorsehen einer strukturellen, in anderen Worten physischen oder körperlichen Vorrichtung ein optisches Bauteil wie z.B. ein Farbfilter, ein Polarisationsfilter, ein Abschwächfilter oder ein Linsenarray schnell, einfach und präzise an einem Bildsensor gehaltert werden kann. Dabei können z.B. der Farbfilter, der Polarisationsfilter oder der Abschwächfilter in der lateralen Ausdehnung des Filters konstante Eigenschaften aufweisen oder alternativ bzw. ergänzend auch lokal veränderliche Eigenschaften aufweisen, die sich z.B. in einer oder zwei Dimensionen kontinuierlich verändern und/oder sich in einer oder zwei Dimensionen diskret oder stufenweise mit fixen oder auch variabel wählbaren Abstufungen verändern. In anderen Worten können die Filter also lokal strukturiert sein. Auch die Eigenschaften der Linsen im Linsenarray können lokal unterschiedlich gewählt sein.

Im Gegensatz zum Stand der Technik, in dem derartige optische Bauteile typischerweise auf den Bildsensor aufgeklebt oder aufgedampft oder als Beschichtung aufgetragen sind und nicht oder nur mit sehr hohem Aufwand zerstörungsfrei von diesem entfernt werden können, kann das in einer Halterung befindliche optische Bauteil bei verändertem Verwendungszweck der Kamera, altersbedingtem Verschleiß des optischen Bauteils oder anderen Gründen leicht ausgetauscht bzw. ausgewechselt werden.

Im Gegensatz zu den erwähnten auf Forschungsebene praktizierten Lösungen, bei denen ein austauschbares optisches Bauteil mühselig unter einem Mikroskop anhand Referenzmarkierungen ausgerichtet werden muss, stellt ein Bildsensor mit einer strukturellen Vorrichtung zur Halterung optischer Bauteile ebenfalls eine deutliche Verbesserung dar.

Unter einem flächenhaften, ortsauflösenden Bildsensor wird im Kontext der vorliegenden Anmeldung eine Vorrichtung zur Aufnahme von zweidimensionalen Abbildern aus Licht auf elektrischem Wege verstanden. Ein solcher flächenhafter, ortsauflösender Bildsensor kann insbesondere durch eine zweidimensionale Anordnung einer Vielzahl kleiner Photodioden realisiert sein; eine solche Anordnung wird im Fachjargon vielfach als Array bezeichnet.

Es handelt es sich bei dem Bildsensor insbesondere um einen halbleiterbasierten Bildsensor. Bevorzugte Ausführungsformen sind in diesem Zusammenhang auf Silizium basierende Sensoren, z.B. nach der CMOS-Technik (CMOS = complementary metal-oxidesemiconductor) gefertigte aktive Pixelsensoren oder CCD-Sensoren (CCD = charge-coupled device). Die Erfindung lässt sich prinzipiell aber auch auf nicht-halbleiterbasierte Bildsensoren anwenden, beispielsweise pyroelektrische Arrays zur Detektion mittlerer und ferner Infrarot-Strahlung oder Focal Plane Arrays auf Basis von Photodioden aus Quecksilber-Cadmium-Tellurid (MCT) für den mittleren Infrarot-Bereich zwischen 3,5 µm und 5 µm.

Prinzipiell ist die Erfindung nicht auf Bildsensoren eines bestimmten Wellenlängenbereichs beschränkt. Die vorliegende Patentanmeldung bezieht sich aber insbesondere auf einen Bildsensor, der für die Bestrahlung mit elektromagnetischer Strahlung im Infrarot-Bereich, sichtbaren Bereich und/oder UV-Bereich vorgesehen ist. Unter dem sichtbaren Bereich werden Wellenlängen zwischen 380 nm und 780 nm verstanden. Unter dem ultravioletten (UV-)Bereich werden Wellenlängen zwischen 200 nm und 380 nm verstanden. Unter dem Infrarot-Bereich wird insbesondere das nahe und mittlere Infrarot mit Wellenlängen zwischen 780 nm und 50 µm verstanden.

Der Bildsensor wird auch als Kamerasensor, Sensorchip oder Bildsensorchip bezeichnet.

Die vorliegende Erfindung ist nicht auf plane Bildsensoren beschränkt, sondern prinzipiell auf Bildsensoren jeglicher Form anwendbar, beispielsweise auch auf gekrümmte Bildsensoren. Dennoch dürfte die Erfindung insbesondere für im Wesentlichen plane Bildsensoren relevant sein, da die meisten zu halternden optischen Bauteile ebenfalls im Wesentlichen plan sind. Unter einem "im Wesentlichen planen" Bildsensor wird ein Bildsensor verstanden, bei dem kein Punkt um mehr als 2% der Länge der Diagonalen des Bildsensors von einer fiktiven, perfekt planen Ebene abweicht.

Der flächenhafte, ortsauflösende Bildsensor ist insbesondere für eine Digitalkamera geeignet. Unter einer Digitalkamera wird eine Vorrichtung verstanden, die statische oder bewegte Bilder elektronisch auf einem digitalen Speichermedium aufzeichnen kann. Die Aufzeichnung auf dem digitalen Speichermedium, d.h. die Umwandlung des von dem einfallenden Licht erzeugten Stroms mittels eines Prozessors in digitale Information, findet bei einer Digitalkamera in der Kamera statt. Die Erfindung ist prinzipiell jedoch auch auf "analoge" Kameras anwendbar, bei der die Umwandlung der elektrischen Stromsignale in digitale Information nicht in der Kamera, sondern außerhalb, geschieht, und die deswegen nicht als Digitalkameras nach der obigen Definition gelten. Als Beispiel für eine derartige analoge Kamera sei eine Kamera mit einem CCD-Bildsensor genannt, bei der mittels eines Koaxialkabels die elektrischen Signale des Bildsensors aus der Kamera zu einer Verarbeitungseinheit, d.h. einem Prozessor, geleitet werden, in der sie in digitale Information umgewandelt werden.

Unter einer strukturellen Vorrichtung wird jegliche Einrichtung verstanden, die körperliche, in anderen Worten physische, Merkmale aufweist. Eine strukturelle Vorrichtung ist insbesondere in Abgrenzung zu lediglich aufgezeichneten, aufgedruckten oder auf den Bildsensor projizierten Markierungen zu sehen. Eine strukturelle Vorrichtung hat unter anderem den Vorteil, dass eine Ausrichtung des optischen Bauteils an der Vorrichtung im Allgemeinen deutlich schneller und einfacher als bei lediglich einer Markierung durchführbar ist.

Die strukturelle Vorrichtung muss zur Halterung des optischen Bauteils geeignet sein. Als Halterung werden umgangssprachlich allgemein Gegenstände, mit denen zwei Dinge zusammengehalten werden, bezeichnet. Im Kontext dieser Patentanmeldung wird unter einer Halterung ein Element verstanden, das imstande ist, ein anderes Bauteil - hier das optische Bauteil - in einer bestimmten Position zu halten. Die Halterung ist insbesondere dazu geeignet, das optische Bauteil am Bildsensor lösbar zu befestigen. Die Tatsache, dass die Befestigung lösbar ausgestaltet ist, ist insofern wichtig, als dass der Zweck der Erfindung ein austauschbares Anbringen eines optischen Bauteils auf einem Bildsensor einer Kamera ist. Somit kann die Halterung insbesondere auch dadurch beschrieben werden, dass sie dazu geeignet ist, das optische Bauteil am Bildsensor austauschbar zu befestigen.

Zusammenfassend weist die Erfindung zumindest die folgenden Vorteile auf: Die optischen Bauteile, die auf dem Bildsensor angebracht sind, können bei Beschädigungen (z.B. altersbedingter Abnutzung oder einmaliges Schadensereignis) einfach ausgetauscht werden. Ferner sind auch sogenannte "customizable cameras" möglich, in denen der Benutzer je nach Anwendungsfall individuell die optischen Bauteile seiner Kamera auswählt und gegebenenfalls diese auch wieder auswechseln kann. Dies stellt für Anwendungen mit geringer Stückzahl oder Rapid Prototyping, also Verfahren zur schnellen Herstellung von Musterbauteilen ausgehend von Konstruktionsdaten, eine attraktive Option dar. Schließlich können zusätzliche optische Bauteile mit vorbestimmter Orientierung zu einem Pixelmuster des Bildsensors auf einen Bildsensor aufgebracht (in anderen Worten: referenziert) werden.

In einer ersten Ausführungsform der Erfindung ist die Vorrichtung dazu ausgelegt, eine Bewegung des optischen Bauteils in mindestens einer Richtung zu unterbinden.

Liegt das optische Bauelement beispielsweise auf dem flächig ausgestalteten, den Bildsensor umgebenden Rahmen auf, kann die strukturelle Vorrichtung in Form einer länglichen Führungsschiene ausgestaltet sein, an die eine Seite des optischen Bauteils angelegt und ausgerichtet werden kann. Damit ist die Orientierung des Bauteils in einer Richtung vorgegeben. Es können auch zwei parallel verlaufende Führungsschienen am Bildsensor vorgesehen werden, die in einem solchen Abstand voneinander angeordnet sind, der genau dem Maß des optischen Bauteils in dieser Richtung entspricht.

In einer zweiten Ausführungsform der Erfindung ist die Vorrichtung dazu ausgelegt, eine Bewegung des optischen Bauteils in mindestens zwei nicht kollineare Richtungen zu unterbinden. Bevorzugt stehen diese beiden Richtungen senkrecht zueinander.

Zusätzlich zu der entlang der einen Kante des optischen Bauteils verlaufenden Führungsschiene kann die Vorrichtung eine zweite Führungsschiene aufweisen, die zu ersten Führungsschiene senkrecht verläuft. Sind die beiden Führungsschienen miteinander verbunden und bilden einen rechten Winkel, können die beiden miteinander verbundenen Führungsschienen als Winkelelement bezeichnet werden. Die beiden senkrecht zueinander senkrecht stehenden Führungsschienen müssen aber nicht miteinander verbunden sein. In jedem Fall sind beide Führungsschienen dazu vorgesehen, dass jeweils eine Kante des optischen Bauelements an ihnen angelegt und ausgerichtet werden kann.

Selbstverständlich sind eine Vielzahl konkreter Ausführungsformen für die Halterungsvorrichtung denkbar. Neben Führungsschienen kann die Halterungsvorrichtung z.B. auch als Vertiefung, Erhebung oder technisches Gelenk ausgestaltet sein. Beispiele für technische Gelenke sind Kugelgelenke mit einem Gelenkkopf und einer Gelenkpfanne, aber auch schlicht ein Sackloch im Rahmen des Bildsensors, eine Bohrung im optischen Bauelement und ein Bolzen, der durch die Bohrung und in das Sackloch gesteckt werden kann. Des Weiteren kann die Halterungsvorrichtung als Einrastelement ausgestaltet sein.

Eine spezielle Vorrichtung zur Halterung des optischen Bauteils stellt eine Dreipunktauflage dar. Für eine Dreipunkt-auflage werden drei Auflagepunkte gewählt, die sich nicht in einer Linie befinden und zur Steigerung der Positioniergenauigkeit untereinander jeweils einen möglichst großen Abstand haben. Die Auflagepunkte können z.B. durch Kugeln und entsprechende Bohrungen in Presspassung oder Rundkopfbolzen mit oder ohne Gewinde (und entsprechenden Bohrungen) realisiert werden.

Der Vorteil einer Dreipunktauflage besteht darin, dass die Position des zu halternden Bauteils eindeutig bestimmt, aber nicht überbestimmt und prinzipiell verspannungsfrei ist.

Je nach Halterungsvorrichtung kann das optische Bauteil mehr oder weniger präzise am Bildsensor ausgerichtet und gehaltert werden. Die Art und Realisierung der Halterungsvorrichtung ist vorteilhafterweise auf den verwendeten Bildsensor und die zu verwendenden optischen Bauteile anzupassen. Handelt es sich bei dem optischen Bauteil, das in der Halterungsvorrichtung gehaltert werden soll, z.B. um ein Mikro-Linsenarray, ist das Mikro-Linsenarray exakt auf die Pixel (Photodioden) auszurichten. Es ist also eine Sub-Pixel-Genauigkeit erforderlich, was bei üblichen Pixelgrößen im Bereich 1 µm bis 10 µm hohe Anforderungen an die Fertigungstoleranzen der Komponenten der Halterungsvorrichtungen stellt. Ähnliches gilt beispielsweise für einen Bayer-Farbfilter, der auf die Bayer-Sensoren des Bildsensor sehr exakt angepasst werden muss. Besteht die Aufgabe dagegen in der Halterung eines linearen Farbverlaufs-Filters, der keine ortsaufgelösten Strukturen aufweist, sind viel geringere Anforderungen an die Präzision der Ausrichtung des Filters bezüglich des Bildsensors zu stellen.

Vorteilhafterweise sind die Abmaße der Halterungsvorrichtung auf die Dimensionen des optischen Bauteils abgestimmt. Langfristig wäre eine Verwendung standardisierter Abmaße denkbar, ähnlich zum "C-Mount" oder anderer genormter Gewindeanschlüsse für (Bewegtbild-)Kameraobjektive im professionellen Bereich.

In einer weiteren Ausführungsform weist der Bildsensor ferner ein Spannelement auf, das dazu vorgesehen ist, das optische Bauelement fest mit dem Bildsensor zu verbinden.

Die allgemeine Halterungsvorrichtung hat primär den Zweck, die Ausrichtung des optischen Bauteils zu erleichtern und das optische Bauteil in einer bestimmten Position zu halten. Die Halterung ist insbesondere dafür ausgelegt, das optische Bauteil am Bildsensor lösbar, in anderen Worten austauschbar, zu befestigen.

Insbesondere für mobile Anwendungen, d.h. wenn es sich um eine portable Kamera handelt, ist es jedoch wünschenswert, wenn das optische Bauteil nicht nur ausgerichtet und gehaltert, sondern zwar lösbar, aber doch stabil und fest am Bildsensor befestigt ist.

Dies kann bereits durch die Halterungsvorrichtung selbst realisiert sein. Weist die Halterungsvorrichtung beispielsweise zwei zueinander parallele Führungsschienen sowie eine dazu senkrechte weitere Anschlagsschiene auf, können diese Schienen z.B. mit C-Profilen gefertigt sein. Das optische Bauteil kann dann in die Halterungsvorrichtung entlang der Führungsschienen und bis zur Anschlagsschiene eingeschoben werden und ist durch das C-Profil von einer Bewegung weg vom Bildsensor geschützt. In diesem Beispiel müsste lediglich noch ein "Herausrutschen" des optischen Bauteils aus der Halterung zu der Seite, in der es hineingeschoben wurde, unterbunden werden (beispielsweise mit einer Loch-Bolzen-Konstruktion), um ein vollständig fixiertes und befestigtes optisches Bauteil zu gewährleisten.

Ist eine derartige Fixierung aber nicht möglich oder nicht gewünscht, kann es vorteilhaft sein, das oben genannte Spannelement vorzusehen.

Das Spannelement ist vorteilhafterweise so ausgelegt, dass es das optische Bauelement, insbesondere mittels Federkraft, auf eine Auflagefläche des Bildsensors presst, wobei ein vorbestimmter maximaler Anpressdruck nicht überschritten wird.

Ein derartiges Spannelement bewirkt zweierlei technische Effekte: Zum einen stellt es die oben beschriebene Fixierung des am Bildsensor gehalterten optischen Bauteils sicher, was insbesondere für eine portable Kamera von Vorteil ist. Zum anderen dient es dazu, übermäßige mechanische Belastungen des Bildsensors durch das gehalterte optische Bauteil zu reduzieren bzw. idealerweise vollständig zu verhindern. Hierfür presst das Spannelement das optische Bauteil mit einem definierten Anpressdruck, der beispielsweise durch die Federkonstante einer Feder, die das Spannelement aufweist, vorgegeben wird, auf den Bildsensor. Dies wird auch als Vorspannung des Spannelements bezeichnet. Wirken nun äußere Kräfte auf das optische Bauteil - verursacht beispielsweise durch eine Erwärmung des Bildsensors und entsprechender thermischer Ausdehnung - können diese Kräfte durch ein Nachgeben der Feder abgeleitet, bzw. in anderen Worten ausgeglichen werden.

Statt einer Feder können auch äquivalente Mittel, beispielsweise Metall- oder Kunststoffelemente, die in vorbestimmtem Ausmaß reversibel biegbar sind, verwendet werden.

Das Spannelement ist so ausgelegt, dass es das optische Bauelement auf eine Auflagefläche des Bildsensors presst. Ein erstes Beispiel für die Auflagefläche des Bildsensors ist ein flächig ausgestalteter Rahmen, der die optisch aktive Fläche des Bildsensors umgibt. Ein zweites Beispiel für eine Auflagefläche des Bildsensors ist ein Lagerungsbereich der strukturellen Vorrichtung (da die strukturelle Vorrichtung zur Halterung des optischen Bauteils auch ein Teil des Bildsensors ist), nämlich zum Beispiel Strukturelemente einer Dreipunktauflage, die als Erhebungen ausgestaltet sind, auf denen das optische Bauteile aufgelegt wird.

Bevorzugt werden das Spannelement und die Auflagefläche des Bildsensors so zueinander angeordnet, dass keine mechanischen Verspannungen in dem optischen Bauteil im Kontaktbereich des Spannelements mit der Auflagefläche erzeugt werden. Dies kann z.B. über eine geradlinige Einkoppelung der Spannkraft des Spannelements durch das optische Bauteil hindurch in den Bereich der Auflagefläche des Bildsensors erfolgen.

In dem Fall, in dem das optische Bauelement im Wesentlichen die gesamte optisch aktive Fläche des Bildsensors bedeckt, kann es vorteilhaft sein, ein Ausgleichsmittel zum Ausgleich des Luftdrucks zwischen der optisch aktiven Fläche des Bildsensors und dem optischen Bauteil vorzusehen.

Unter der optisch aktiven Fläche wird diejenige Fläche des Bildsensors verstanden, die zur Erzeugung elektrischer Ladungen führt, wenn sie von Licht bestrahlt wird. Der Rahmen oder ähnliche Bauteile des Bildsensors sind beispielsweise kein Teil der optisch aktiven Fläche des Bildsensors.

Bedeckt das optische Bauteil im Wesentlichen die gesamte optisch aktive Fläche des Bildsensors und schließen die Halterungsvorrichtung und/oder Bestandteile des Bildsensors den Raum zwischen dem optischen Bauteil und dem Bildsensor luftdicht ab, können bereits relativ kleine Luftdruckschwankungen zu Verformungen bzw. Verschiebungen des optischen Bauteils relativ zum Bildsensor bewirken. Um zu erreichen, dass auf beiden Seiten des optischen Bauteils stets derselbe Luftdruck herrscht, kann der Bildsensor ein Ausgleichsmittel aufweisen.

Das Ausgleichsmittel kann beispielsweise aus einer oder mehreren Bohrungen bestehen, die eine luftdurchlässige Verbindung auf beiden Seiten des optischen Bauteils gewährleisten. Wenn der Bildsensor vor z.B. Verschmutzung geschützt werden soll, können die Ausgleichsmittel auch mit elastischen Elementen, z.B. Membranen, ausgeführt sein, die über eine veränderliche Durchbiegung einen nahezu vollständigen Abgleich des Luftdrucks auf beiden Seiten des elastischen Elements ermöglichen. Alternativ kann ein Filter in dem Ausgleichselement vorgesehen sein, der Luft durchlässt, aber Partikel ab einer gewissen Größe von der optisch aktiven Fläche des Bildsensors fernhält.

In einer Ausführungsform der Erfindung weist der Bildsensor einen Rahmen um seine optisch aktive Fläche auf und die strukturelle Vorrichtung zur Halterung des optischen Bauteils befindet sich auf dem Rahmen.

In einer anderen Ausführungsform der Erfindung ist der Bildsensor mit weiteren Komponenten, insbesondere einer Hauptplatine, die auch als Motherboard bezeichnet wird, verbunden, die auch als Teil des Bildsensors ansehbar ist. Die strukturelle Vorrichtung zur Halterung des optischen Bauteils kann sich in diesem Fall auch auf der weiteren Komponente befinden.

In einer weiteren Ausführungsform der Erfindung ist der Bildsensor mit einem Deckglas bedeckt, das auch als Teil des Bildsensors ansehbar ist. Die strukturelle Vorrichtung zur Halterung des optischen Bauteils kann sich in diesem Fall auch auf dem Deckglas befinden.

In einer weiteren Ausführungsform der Erfindung weist die strukturelle Vorrichtung einen Aktor auf. Der Aktor ist dazu ausgestaltet, zumindest eine erste Stellung, in der das optische Bauteil festgehalten wird, oder eine zweite Stellung, in der das optische Bauteil freigegeben wird, einnehmen zu können.

Das optische Bauteil kann mittels einer derart ausgestalteten strukturellen Vorrichtung nicht nur gehaltert, sondern auch dezidiert fixiert oder gelöst werden. Sinnvollerweise wird der Aktor in die erste Stellung gebracht, wenn das optische Bauteil auf dem Bildsensor aufgebracht ist und eine Verwendung des mit dem optischen Bauteil ausgestatteten Bildsensors beabsichtigt ist. Der Aktor wird dagegen in die zweite Stellung gebracht, wenn das optische Bauteil entnommen oder eingelegt werden soll.

Der Aktor kann beispielsweise nur wenige Mikrometer, insbesondere weniger als zehn Mikrometer, bevorzugt weniger als fünf Mikrometer, groß sein und mittels Techniken hergestellt sein, die aus der Fertigung von *microelectromechanical systems (MEMS)* oder *microoptoelectromechanical systems (MOEMS)* bekannt sind. Als Grundmaterial des Aktors können Materialien aus der Halbleiterelektronik, wie z.B. Silizium oder Galliumarsenid, verwendet werden. Diese Materialien bzw. Fertigungsverfahren sind insbesondere sehr gut kompatibel mit halbleiterbasierten Bildsensoren, die aus ähnlichen Materialen und mittels ähnlicher Fertigungsverfahren hergestellt werden können. Ein weiterer Vorteil von MEMS- oder MOEMS-Fertigungsverfahren ist, dass kleine Strukturgrößen im Bereich weniger Mikrometer präzise realisiert werden können. Da viele optische Bauteile eine Ausrichtung mit Sub-Pixel-Genauigkeit bezüglich der optisch aktiven Fläche des Bildsensors erfordern, stellen MEMS-Fertigungsverfahren eine geeignete Wahl zur Fertigung des Aktors der strukturellen Vorrichtung dar. Bei dem Aktor kann es sich um einen monopolar oder bipolar wirkenden Aktor handeln.

Vorteilhafterweise kann der Aktor elektrisch angesteuert werden. Hierfür weist der Aktor insbesondere Kontakte auf, mittels derer er angesteuert werden kann.

In einer ersten Variante kann es sich hierbei um offene Kontakte, die lediglich zum Zweck des Einbringens, Entnehmens oder Austauschens des optischen Bauteils kontaktiert und angesteuert werden können, handeln.

In einer zweiten Variante sind die Kontakte dauerhaft mit einer Steuerungsvorrichtung, insbesondere einer elektronischen Steuerungsvorrichtung, verbunden. Mittels der Steuerungsvorrichtung kann der Aktor dann in die erste Stellung, zweite Stellung oder etwaige weitere Stellungen gebracht werden.

Die strukturelle Vorrichtung kann des Weiteren einen Sensor aufweisen, der erkennt, in welcher Stellung sich der Aktor aktuell befindet.

Nicht nur der Aktor, sondern die gesamte strukturelle Vorrichtung können vorteilhafterweise nach den genannten MEMS-Fertigungsverfahren hergestellt werden.

Alternativ kann die strukturelle Vorrichtung mittels abtragender Fertigungsverfahren wie beispielsweise Ätzen, Bohren oder Laserablation, bei der Material von einer Oberfläche durch Beschuss mit gepulster Laserstrahlung entfernt wird, realisiert werden.

Aber auch generative Fertigungsverfahren stellen eine vielversprechende Option dar, um mit hoher Präzision und Flexibilität die gewünschte strukturelle Vorrichtung am Bildsensor zu realisieren. Es ist hierbei wichtig, dass die generierten Materialschichten gut auf das Material des Bereichs des Bildsensors abgestimmt sind, auf das sie aufgebracht sind.

Ein weiterer Aspekt der Erfindung betrifft eine Kamera mit einem flächenhaften, ortsauflösenden Bildsensor nach einem der oben beschriebenen Ausführungsformen. Die Kamera ist insbesondere eine digitale Kamera mit Umwandlung der elektrischen Signale in digitale Information innerhalb der Kamera. Alternativ kann die Kamera auch eine analoge Kamera sein, bei der die Umwandlung der elektrischen Signale in digitale Information außerhalb der Kamera stattfindet.

Vorteilhafterweise ist die strukturelle Vorrichtung auf derjenigen Seite des Bildsensors angebracht, die zur Bestrahlung des Bildsensors mit elektromagnetischer Strahlung vorgesehen ist. In anderen Worten ist die strukturelle Vorrichtung vorteilhafterweise in Ausbreitungsrichtung der elektromagnetischen Wellen vor dem Bildsensor angeordnet.

Dies hat den Effekt, dass sich das zu halternde optische Bauteil im Strahlengang vor dem Bildsensor befindet, was für die meisten optischen Bauteile, wie optische Filter oder Linsenarrays, die gewünschte bzw. erforderliche Platzierung ist. Der Bildsensor der Kamera ist insbesondere sensitiv für elektromagnetische Strahlung im Infrarot-Bereich, sichtbaren Bereich oder UV-Bereich, wobei für die einzelnen Bereiche die eingangs erwähnten Definitionen gelten.

Vorteilhafterweise weist die Kamera ausreichend Freiraum um den Bildsensor für ein einfaches und komfortables Wechseln des optischen Bauteils auf.

Nachfolgend werden beispielhaft Bildsensoren mit jeweils einer strukturellen Vorrichtung zur Halterung eines optischen Bauteils gezeigt. Die gezeigten Ausführungsbeispiele illustrieren rein exemplarisch, wie eine solche strukturelle Vorrichtung ausgestaltet sein kann. Sie dienen angesichts der Fülle an den im restlichen Teil der Beschreibung offenbarten Varianten lediglich der Veranschaulichung der Erfindung anhand einiger weniger Beispiele.

Die Abbildungen zeigen:
- Fig. 1:: Bildsensor mit Halterungsvorrichtung, die drei Strukturelemente aufweist und als Dreipunkt-Auflage realisiert ist;
- Fig. 2:: Das erste der drei in Fig. 1 gezeigten Strukturelemente im Querschnitt;
- Fig. 3:: Das zweite der drei in Fig. 1 gezeigten Strukturelemente im Querschnitt;
- Fig. 4:: Das dritte der drei in Fig. 1 gezeigten Strukturelemente im Querschnitt;
- Fig. 5:: Bildsensor mit alternativer Halterungsvorrichtung, die als Dreipunkt-Auflage realisiert ist; und
- Fig. 6:: Bildsensor mit Halterungsvorrichtung in einer weiteren Ausführungsform.

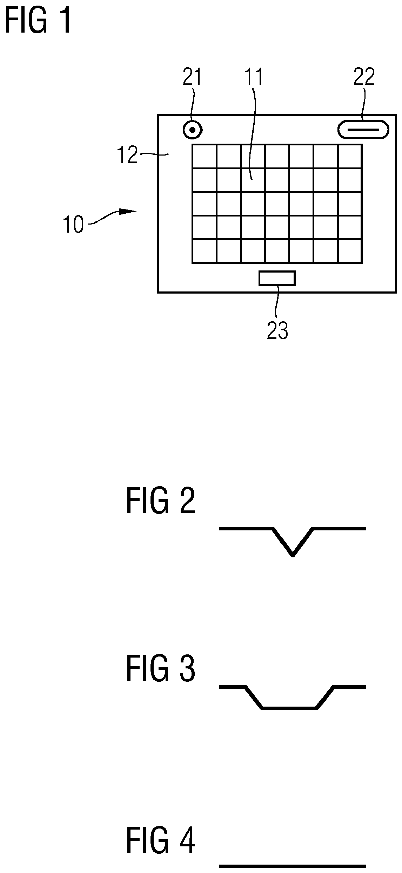

Die Fig. 1 zeigt einen flächenhaften, ortsauflösenden Bildsensor 10. Den flächenmäßig größten Teil des Bildsensors 10 nimmt die optisch aktive Fläche 11 ein. Diese besteht aus einer Vielzahl von in regelmäßigen Abständen zueinander angeordneten Photodioden, welche die Energie der auf sie auftreffenden elektromagnetischen Strahlung in elektrischen Strom umwandeln. Die optisch aktive Fläche 11 des Bildsensors 10 ist von einem Rahmen 12 umgeben. Die Abmaße des Bildsensors betragen beispielsweise 4 cm x 3 cm.

Der Rahmen 12 weist eine Vorrichtung zur Halterung (im Rahmen dieser Patentanmeldung synonym auch als "Halterungsvorrichtung" bezeichnet) eines optischen Bauteils auf. In dem in Fig. 1 gezeigten Beispiel besteht die Halterungsvorrichtung aus drei voneinander beabstandeten Strukturelementen.

Das erste Strukturelement 21 ist als kegelstumpfförmige Einkerbung in einer ersten Ecke des Rahmens 12 ausgestaltet. Die maximale Tiefe des ersten Strukturelements 21 relativ zu der Ebene des im Wesentlichen planen Rahmens 12 beträgt beispielsweise 2 mm. Ein Querschnitt des ersten Strukturelements 21 senkrecht zur Ebene des Rahmens 12 ist in Fig. 2 illustriert.

Das zweite Strukturelement 22 ist als längliche "Mulde" ausgestaltet. Ein Querschnitt des zweiten Strukturelements 22 senkrecht zur Ebene des Rahmens 12 ist in Fig. 3 illustriert. Das zweite Strukturelement 22 ist einer anderen Ecke des Rahmens 12 angeordnet.

Das dritte Strukturelement 23 befindet sich in etwa mittig auf dem unteren Rand des Rahmens 12 des Bildsensors 10. Es ist als Ebene, in anderen Worten: als Auflagefläche, ausgestaltet. Sein Querschnitt senkrecht zur Ebene des Rahmens 12 ist in Fig. 4 gezeigt. Das als Auflagefläche ausgestaltete dritte Strukturelement 23 kann als Vertiefung, Erhebung oder in derselben Ebene wie der Rahmen 12 realisiert sein. In dem in Fig. 1 gezeigten Beispiel ist das dritte Strukturelement 23 in derselben Ebene wie der Rahmen 12 ausgestaltet.

Grundsätzlich können auch das erste und zweite Strukturelement 21, 22 als Erhebungen anstatt als Vertiefungen ausgestaltet sein.

Die in Fig. 1 gezeigte Halterungsvorrichtung ist dazu geeignet, ein optisches Bauteil, das in drei Bereichen des Bauteils zu den jeweiligen Strukturelementen 21, 22, 23 geeignete komplementäre Strukturelemente aufweist, zu haltern. Ein derartiges optisches Bauteil ist dann zumindest auf der Ebene des Rahmens 12 zuverlässig und - je nach Fertigungsgenauigkeit der Halterungsvorrichtung des Bildsensors 10 sowie der komplementären Strukturelemente auf dem optischen Bauteil - mit einer entsprechenden Genauigkeit positioniert.

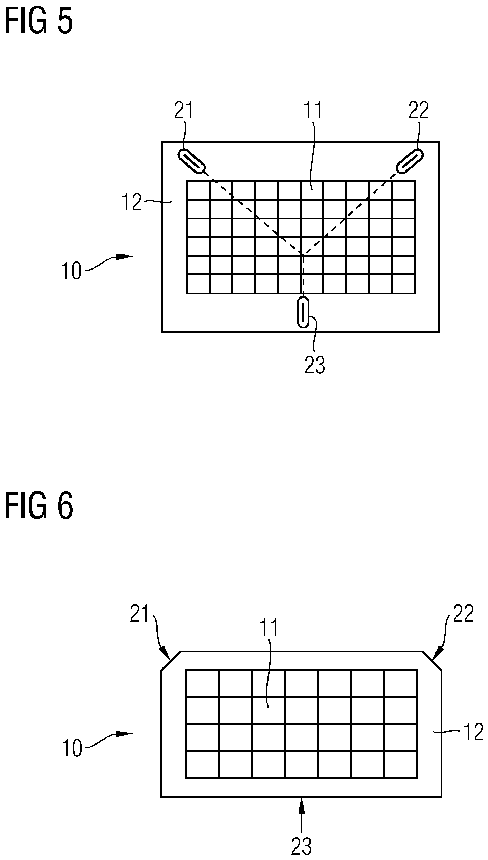

Die Fig. 5 zeigt einen Bildsensor 10 mit einer alternativen Halterungsvorrichtung, die ebenfalls als Dreipunkt-Auflage realisiert ist. Es befinden sich an ungefähr denselben Stellen des Rahmens 12 wie in dem Ausführungsbeispiel der Fig. 1 wiederum ein erstes, zweites und drittes Strukturelement 21, 22, 23. Alle drei Strukturelement 21, 22, 23 sind jedoch im Querschnitt ähnlich gestaltet, nämlich jeweils als längliche Mulde vergleichbar dem in Fig. 3 gezeigten Querschnitt. Die drei muldenförmigen Strukturelemente 21, 22, 23 sind so zueinander orientiert, dass sich ihre jeweiligen Längsachsen in einem Schnittpunkt treffen, der in etwa in der Mitte der optisch aktiven Fläche 11 des Bildsensors 10 liegt. Dies hat den Vorteil, dass der Referenzpunkt für die Lagerung zumindest näherungsweise in der Mitte des Bildsensors bzw. genutzten Bereichs des optischen Bauteils liegt und so etwaig auftretende Toleranzen in der relativen Anordnung von Bildsensor und optischem Bauteil minimiert werden. Die zu minimierenden Toleranzen können dabei statisch vorliegen, z.B. aus Fertigungstoleranzen, oder auch im Betrieb dynamisch entstehen z.B. durch unterschiedliche Erwärmung und/oder thermische Ausdehnung von Bildsensor und optischem Bauteil. Eine unterschiedliche thermische Ausdehnung skaliert mit zunehmender Länge linear, so dass mit dem Referenzpunkt in der Mitte von Bildsensor und dem genutzten Bereich des optischen Bauteils solche Effekte in der Größenordnung ungefähr halbiert werden können. Durch die Wahl des Referenzpunktes in der Mitte von Bildsensor und dem genutzten Bereich des optischen Bauteils treten dann solche Störeffekte symmetrisch zu einer optischen Achse auf, weil ein Bildsensor typischerweise ebenfalls mit seiner Mitte zumindest näherungsweise ebenfalls auf der optische Achse des optischen Systems angeordnet wird.

Selbstverständlich kann die beschriebene Ausführungsform so abgewandelt werden, dass der effektive Referenzpunkt so gelegt wird, dass er in der nominellen Anordnung auf einer ausgezeichneten Geräteachse, die beispielsweise die optische Achse des optischen Systems darstellt, zu liegen kommt.

Schließlich zeigt die Fig. 6 eine weitere Alternative eines Bildsensors 10 mit einer Vorrichtung zur Halterung eines optischen Bauteils. Hier ist die Halterungsvorrichtung als Abschrägung einer ersten Ecke - dies stellt das erste Strukturelement 21 dar - und als Abschrägung einer zweiten Ecke - dies stellt das zweite Strukturelement 22 dar - ausgestaltet. Als drittes Strukturelement 23 fungiert in dem in Fig. 6 gezeigten Beispiel die untere, der ersten und zweiten Ecke entgegengesetzten Kante des Bildsensors 10 bzw. dessen Rahmens 12. Ein von dieser Halterungsvorrichtung halterbares optisches Bauteil weist Ränder auf, die komplementär zu dem ersten, zweiten und dritten Strukturelement 21, 22, 23 der Halterungsvorrichtung sind. Ein geeignetes optisches Bauteil kann also sozusagen über den Bildsensor 10 "übergestülpt" werden und sitzt press an den Kanten des Rahmens 12 des Bildsensors aufgrund der aufeinander angepassten Abmaße und Formen. Eine derartig ausgestaltete Halterungsvorrichtung hat unter anderem den Vorteil, dass der Platzbedarf des Rahmens 12 des Bildsensors minimiert wird. Des Weiteren müssen keine Erhebungen oder Vertiefungen am Rahmen vorgesehen werden, sondern es müssen lediglich die Geometrien des Rahmens und der Ränder des optischen Bauteils aufeinander angepasst werden.

Die hier beschriebene Grundanordnung kann, wie für Fig. 5 ausführlich beschrieben, in Bezug auf die Richtung der Schrägen so ausgeführt werden, dass der Referenzpunkt standardmäßig z.B. in der Mitte des Bildsensors zu liegen kommt.

Ein weiterer Vorteil besteht darin, dass mit einer derartigen Ausführung des Strukturelements der Fertigungsaufwand auf Seiten des Bildsensors minimiert wird, was die Mehrkosten bei der Fertigung deutlich reduzieren bzw. entfallen lässt. Ferner kann so die konkrete Ausführung der Halterungsvorrichtung an das optische Bauteil und dessen konkreten Fertigungsprozess angepasst werden, was ebenfalls zur Optimierung der Kostenstruktur der gesamten optischen Anordnung aus Bildsensor und optischem Bauteil ausgenutzt werden kann.

Bei schwereren optischen Bauteilen kann so beispielsweise auch der Bildsensor an dem optischen Bauteil befestigt werden und nicht wie bei leichten optischen Bauteilen das optische Bauteil am Bildsensor.

Insgesamt kann die Vorrichtung zur Halterung des Bildsensors auch dazu verwendet werden, den Bildsensor auch ohne zusätzliche optische Bauteile unmittelbar über ein komplementäres Strukturelement in einer mechanisch vorbestimmten Lage in einen optischen Aufbau ohne weitere Justage aufgenommen werden. So können auch Fertigungs- und Montageprozesse für optische Systeme vereinfacht und abgekürzt werden bzw. sogar komplett entfallen.

## Patentansprüche

1. Flächenhafter, ortsauflösender Bildsensor (10) für eine Kamera, **dadurch gekennzeichnet, dass** der Bildsensor (10) eine strukturelle Vorrichtung zur Halterung eines optischen Bauteils aufweist.

2. Bildsensor (10) nach Anspruch 1,
wobei die Vorrichtung dazu ausgelegt ist, eine Bewegung des optischen Bauteils in mindestens einer Richtung, vorzugsweise in mindestens zwei zueinander senkrecht stehenden Richtungen, zu unterbinden.

3. Bildsensor (10) nach einem der vorhergehenden Ansprüche,
wobei die Vorrichtung dazu ausgelegt ist, eine Dreipunktauflage des optischen Bauteils zu realisieren.

4. Bildsensor (10) nach einem der vorhergehenden Ansprüche,
wobei die Vorrichtung eine Führungsschiene aufweist.

5. Bildsensor (10) nach einem der vorhergehenden Ansprüche,
wobei die Vorrichtung ein Winkelelement aufweist.

6. Bildsensor (10) nach einem der vorhergehenden Ansprüche,
wobei der Bildsensor (10) ferner ein Spannelement aufweist, das dazu vorgesehen ist, das optische Bauelement fest mit dem Bildsensor (10) zu verbinden.

7. Bildsensor (10) nach Anspruch 6,
wobei das Spannelement so ausgelegt ist, dass es das optische Bauelement, insbesondere mittels Federkraft, auf eine Auflagefläche des Bildsensors (10) presst, wobei ein vorbestimmter maximaler Anpressdruck nicht überschritten wird.

8. Bildsensor (10) nach einem der vorhergehenden Ansprüche,
wobei das optische Bauelement im Wesentlichen die gesamte optisch aktive Fläche (11) des Bildsensors (10) bedeckt und der Bildsensor (10) ein Ausgleichsmittel zum Ausgleich des Luftdrucks zwischen der optisch aktiven Fläche (11) des Bildsensors (10) und dem optischen Bauteil aufweist.

9. Bildsensor (10) nach Anspruch 8,
wobei das Ausgleichsmittel mindestens eine Bohrung aufweist, die ein luftdurchlässige Verbindung zwischen einem von der optisch aktiven Fläche (11) des Bildsensors (10) und dem optischen Bauteil definierten Raum und der Umgebung realisiert.

10. Bildsensor (10) nach einem der vorhergehenden Ansprüche,
wobei die strukturelle Vorrichtung einen Aktor aufweist, der dazu ausgestaltet ist, eine erste Stellung, in der das optische Bauteil festgehalten, oder eine zweite Stellung, in der das optische Bauteil freigegeben wird, einnehmen zu können.

11. Bildsensor (10) nach Anspruch 10,
wobei der Aktor Kontakte zur Ansteuerung mit einer Steuerungsvorrichtung, insbesondere einer elektronischen Steuerungsvorrichtung, aufweist.

12. Bildsensor (10) nach einem der vorhergehenden Ansprüche,
wobei der Bildsensor (10) im Wesentlichen plan ist.

13. Bildsensor (10) nach einem der vorhergehenden Ansprüche,
wobei das optische Bauteil ein optischer Filter, ein Polarisationsfilter oder ein Linsenarray, insbesondere ein Mikro-Linsenarray, ist.

14. Kamera mit einem flächenhaften, ortsauflösenden Bildsensor (10) nach einem der Ansprüche 1 bis 13.

15. Kamera nach Anspruch 14,
wobei die strukturelle Vorrichtung auf derjenigen Seite des Bildsensors (10) angebracht ist, die zur Bestrahlung des Bildsensors (10) mit elektromagnetischer Strahlung, insbesondere mit elektromagnetischer Strahlung im Infrarot-Bereich, sichtbaren Bereich oder UV-Bereich, vorgesehen ist.
